# EUROPEAN PATENT SPECIFICATION

(11) **EP 4 429 198 B1**
(45) Date of publication and mention of the grant of the patent: **03.06.2026**
(21) Application number: 23192827.6
(22) Date of filing: 22.08.2023
(51) Int. Cl.: H04L 65/403, H04L 65/75, H04L 65/80, H04L 65/1023

(54) **ASSISTING SYSTEM FOR ONLINE MEETING AND ASSISTING METHOD FOR USING THE SAME**
HILFSSYSTEM FÜR ONLINE-MEETING UND HILFSVERFAHREN ZUR VERWENDUNG DAVON
SYSTÈME D'ASSISTANCE POUR UNE RÉUNION EN LIGNE ET PROCÉDÉ D'ASSISTANCE POUR L'UTILISER

(30) Priority: 07.03.2023 TW 112108341
(43) Date of publication of application: 11.09.2024
(73) Proprietor: NetKlass Technology Inc., Zhubei City, Hsinchu County 302082 (TW)
(72) Inventor: LEE, Ming-Tang, Zhubei City, Hsinchu County 302082 (TW)
(74) Representative: 2K Patent Partnerschaft mbB

(56) References cited:
- EP-A1- 2 611 122
- US-A1- 2020 162 618

## Description

### BACKGROUND OF THE DISCLOSURE

### Technical Field

The disclosure relates to an online meeting, and particularly to an assisting system and method for the online meeting.

### Description of Related Art

General speaking, when a user wants to initiate or attend an online meeting, the user has to use an electronic device such as a personal computer, a laptop, a tablet, or a smart phone, etc. to run an online meeting software. After the online meeting software is executed, the electronic device may initiate a new online meeting room or join an existing online meeting room.

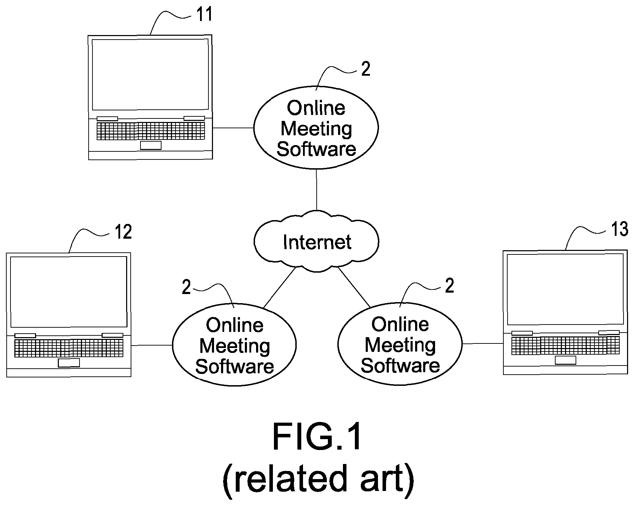

Please refer to FIG. 1, which is a schematic diagram of connection of an online meeting. When multiple users want to join the same online meeting, each of the user needs to respectively use his/her own electronic device, and each of the electronic devices needs to be installed with the online meeting software supporting this online meeting.

As shown in FIG. 1, a first user uses a first electronic device 11, a second user uses a second electronic device 12, a third user uses a third electronic device 13, and each of the electronic devices needs to install same and compatible online meeting software 2. Therefore, the first electronic device 11, the second electronic device 12, and the third electronic device 13 may join the same online meeting. However, to install the online meeting software 2 in the electronic device in advance will bother a part of the users.

In addition, the current online meeting software 2 won't optimize user's voice; therefore, echoes, noises, or asynchronous audio due to network latency often occurs during online meeting and seriously affects the process of online meeting.

Moreover, users use the electronic devices to run the online meeting software 2 to attend the online meeting, so the quality of microphone and speaker on the electronic devices greatly dominate the communication quality of the online meeting. Because some of the electronic devices are only embedded with low-end microphone and speaker, the communication quality of the online meeting is challenged.

US 2020/162618 A1 relates to systems, apparatus, and methods for processing audio signals associated with conferencing devices communicatively connected in a daisy-chain configuration using local connection ports included on each device. One method involving a first conferencing device comprises receiving auxiliary mixed microphone signal(s) from at least one other conferencing device via at least one local connection port, each auxiliary signal comprising a mix of microphone signals captured by the at least one other conferencing device; determining a gain adjustment value for each auxiliary mixed microphone signal based on a daisy-chain position of the at least one other conferencing device relative to the position of the first conferencing device; adjusting a gain value for each auxiliary mixed microphone signal based on the corresponding gain adjustment value; generating a loudspeaker output signal from the gain-adjusted auxiliary mixed microphone signal(s); and providing the loudspeaker signal to the loudspeaker of the first conferencing device.

### SUMMARY OF THE DISCLOSURE

The present disclosure is directed to an assisting system as defined by independent claim 1 and an assisting method for online meeting as defined by claim 12, which may simplify the arrangement of online meeting and optimize the communication quality of online meeting by using an audio transceiver apparatus and a mixing apparatus.

In one of the exemplary embodiments, the assisting system for online meeting of the present disclosure includes:
one electronic device that installs and runs an online meeting software causing the electronic device to participate in an online meeting over the Internet, said electronic device running said online meeting software being designated a master electronic device, whereby said master electronic device is connected to an audio transceiver apparatus designated a master audio transceiver apparatus; and
one or more other electronic devices not having installed and not running said online meeting software, each of the one or more other electronic devices being connected to one of a plurality of audio transceiver apparatuses, designated slave audio transceiver apparatuses;
wherein each of the master audio transceiver apparatus and the one or more slave audio transceiver apparatuses comprises a first network module that is configured to wirelessly connect with a mixing apparatus, and
the mixing apparatus comprising a second network module that is configured to wirelessly connect with each of the audio transceiver apparatuses;
wherein the mixing apparatus is configured to receive audio signals from the master audio transceiver device and the one or more slave audio transceiver apparatuses, perform a mixing process to the audio signals to generate an optimized audio signal, and synchronously transmit the optimized audio signal to all of the audio transceiver apparatuses that are connected with the mixing apparatus;
wherein the master audio transceiver apparatus receiving the optimized audio signal from the mixing apparatus enables the one or more other electronic devices to also participate in the online meeting over the Internet, via the connected master electronic device.

In one of the exemplary embodiments, the assisting method for online meeting of the present disclosure is incorporated with an assisting system comprising:
one master electronic device that installs and runs an online meeting software causing the master electronic device to participate in an online meeting over the Internet, a master audio transceiver apparatus connected with the master electronic device, one or more other electronic devices not having installed and not running said online meeting software, aone or more slave audio transceiver apparatuses respectively connected to the one or more other electronic device, and a mixing apparatus wirelessly connected with each of the master audio transceiver apparatus and the one or more slave audio transceiver apparatuses, wherein the master audio transceiver apparatus electrically connected to an electronic device that attends an online meeting, and the assisting method comprises:
a) respectively transmitting an audio signal to the mixing apparatus by the master audio transceiver apparatus and the one or more slave audio transceiver apparatuses;
b) receiving audio signals and performing a mixing process to the audio signals to generate an optimized audio signal by the mixing apparatus;
c) synchronously transmitting the optimized audio signal to the master audio transceiver apparatus and the one or more slave audio transceiver apparatuses that are connected with the mixing apparatus by the mixing apparatus;
d) respectively receiving the optimized audio signal by the master audio transceiver apparatus and the one or more slave audio transceiver apparatuses; and
e) receiving the optimized audio signal from the mixing apparatus to enable the one or more other electronic devices to also participate in the online meeting over the Internet, via the connected master electronic device, by the master audio transceiver apparatus.

By using the present disclosure, only one electronic device in the environment needs to install and run the online meeting software and then multiple users are allowed to use multiple electronic devices to simultaneously attend the same online meeting. In comparing with the related arts, the present disclosure simplifies the arrangement required for online meeting and optimizes the communication quality of online meeting.

### DESCRIPTION OF THE DRAWINGS

FIG. 1 is a schematic diagram of connection of an online meeting.
FIG. 2 is a schematic diagram of an assisting system according to an embodiment of the present disclosure.
FIG. 3 is a connection sequence diagram according to an embodiment of the present disclosure.
FIG. 4 is a block diagram of an audio transceiver apparatus according to an embodiment of the present disclosure.
FIG. 5 is a block diagram of a mixing apparatus according to an embodiment of the present disclosure.
FIG. 6 is a flowchart of audio processing according to an embodiment of the present disclosure.

### DETAILED DESCRIPTION OF THE DISCLOSURE

In cooperation with the attached drawings, the technical contents and detailed description of the present disclosure are described hereinafter according to multiple embodiments, being not used to limit its executing scope. Any equivalent variation and modification made according to appended claims is all covered by the present disclosure.

The present disclosure discloses an online meeting assisting system (referred to as the assisting system hereinafter), the assisting system may sense, optimize, mix, and play the audio (e.g., sound) of multiple users arround the environment, therefore, only one electronic device is required to run the online meeting software and then multiple users in the same environment are able to attend same online meeting. In sum, the setting procedure for the users to attend the online meeting and the hassle for the installation of the online meeting software can be greatly reduced.

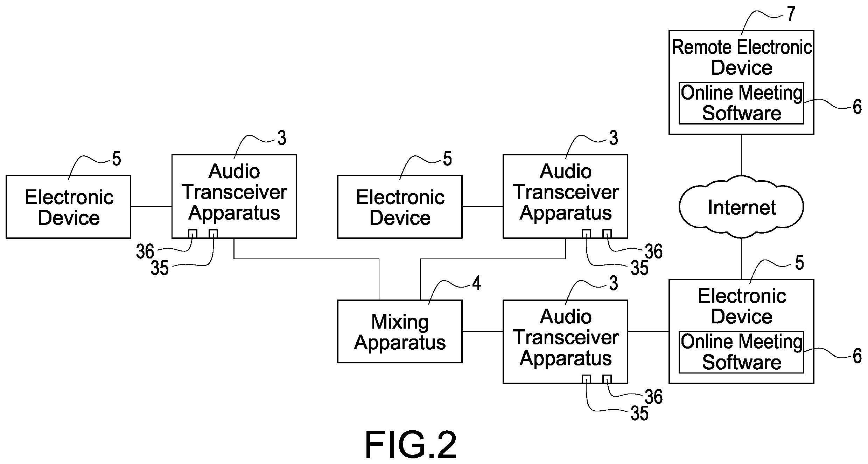

Please refer to FIG. 2, which is a schematic diagram of an assisting system according to an embodiment of the present disclosure. As shown in FIG. 2, the assisting system of the present disclosure includes multiple audio transceiver apparatuses 3 and a mixing apparatus 4. Each of the audio transceiver apparatuses 3 may be a portable apparatus or a fixed apparatus used to electrically connect to user's electronic device 5. While using the assisting system, each of the audio transceiver apparatuses 3 is located within a wireless sensing range of the mixing apparatus 4 so that each of the audio transceiver apparatuses 3 may establish a wireless connection with the mixing apparatus 4 through the wireless network.

As shown in FIG. 2, the mixing apparatus 4 of the present disclosure is used with multiple audio transceiver apparatuses 3, where each of the audio transceiver apparatuses 3 is respectively connected to one electronic device 5. In one embodiment, the electronic device 5 is the device used to initiate or attend an online meeting, such as a personal computer, a laptop, a tablet, or a smart phone, etc. One technical feature of the present disclosure is that only one of the multiple electronic devices 5 needs to install and run an online meeting software 6 to initiate or attend an online meeting and then the rest of the electronic devices 5 in the environment can communicate (including speaking and hearing) in the same online meeting through the mixing apparatus 4 and the multiple audio transceiver apparatuses 3.

In particularly, each of the audio transceiver apparatuses 3 respectively includes an audio receiving device 35 which may be a microphone. Also, each of the audio transceiver apparatuses 3 respectively includes an audio playing device 36 which may be a speaker or an earphone. In the present disclosure, the audio transceiver apparatus 3 may replace the native microphone and speaker embedded in the electronic device 5 by the audio receiving device 35 and the audio playing device 36 after being connected to the electronic device 5. Therefore, the user may obtain a better communication quality by using the audio receiving device 35 and the audio playing device 36 of the audio transceiver apparatus 3.

The mixing apparatus 4 wirelessly connects to the multiple audio transceiver apparatuses 3 through the wireless network. More specifically, multiple audio transceiver apparatuses 3 may be arranged in the environment, each of the audio transceiver apparatuses 3 respectively requests the mixing apparatus 4 for connection. In the embodiment, the mixing apparatus 4 only provides its service for one or more of the audio transceiver apparatuses 3 that are under connection with the mixing apparatus 4.

In the disclosure, the mixing apparatus 4 receives an audio signal of each of the audio transceiver apparatuses 3 through the wireless network and performs a mixing process to the received audio signal to generate an optimized audio signal. After the mixing process, the mixing apparatus 4 synchronously transmits the optimized audio signal to all of the audio transceiver apparatuses 3 that are under connection with the mixing apparatus 4.

In one embodiment, each of the audio transceiver apparatuses 3 may be arranged with an independent audio playing device 36. After receiving the optimized audio signal from the mixing apparatus 4, each of the audio transceiver apparatuses 3 may play the received optimized audio signal by its audio playing device 36. In another embodiment, each of the audio transceiver apparatuses 3 may respectively connect to an external audio playing device (not shown in FIG. 2) to play the optimized audio signal received from the mixing apparatus 4 through the external audio playing device.

In the present disclosure, the optimized audio signal has passed the mixing process performed by the mixing apparatus 4, and all the audio transceiver apparatuses 3 in the environment may receive same optimized audio signal transmitted by the same mixing apparatus 4. Therefore, the quality and synchronization of the audio/sound heard by each user through each audio transceiver apparatus 3 may be improved.

In addition, each of the audio transceiver apparatuses 3 respectively connects to one electronic device 5. When an electronic device 5 (called the master electronic device in the following) initiates or attends an online meeting through executing the online meeting software 6, the audio transceiver apparatus 3 connected to the master electronic device will be regarded as a master audio transceiver apparatus by the assisting system. When receiving the optimized audio signal from the mixing apparatus 4, the master audio transceiver apparatus transmits the optimized audio signal to the master electronic device connected therewith, and the master electronic device directly uses the optimized audio signal as an input audio of the online meeting. Therefore, even though other users using other audio transceiver apparatuses 3 do not attend the online meeting directly through the online meeting software 6, but they can still speak in the online meeting in which the master electronic device is attending.

As shown in FIG. 2, when a remote electronic device 7 joins the same online meeting by using same online meeting software 6, the remote electronic device 7 may obtain the optimized audio signal which is the input audio of the master electronic device over the Internet. As discribed above, the optimized audio signal is generated by the mixing process performed by the mixing apparatus 4 and includes all the sounds from the users who speak to the audio receiving devices 35 of the audio transceiver apparatuses 3. Therefore, even if the electronic devices 5 used by other users do not install the online meeting software 6, the user of the remote electronic device 7 may still hear other users' voice from the online meeting.

On the other hand, when receiving other attendant's voice from the online meeting, the master electronic device transmits the received audio signal to the mixing apparatus 4 through the master audio transceiver apparatus. The mixing apparatus 4 performs the mixing process to the audio signal and then transmits the processed audio signal (i.e., anoter optimized audio signal) to all of the audio transceiver apparatuses 3 that are currently under connection with the mixing apparatus 4. Therefore, even if other electronic devices 5 in the environment do not actually join the online meeting, the users of the other electronic device 5 may still hear other attendant's speech in the online meeting by the audio playing device 36 of each of the audio transceiver apparatuses 3.

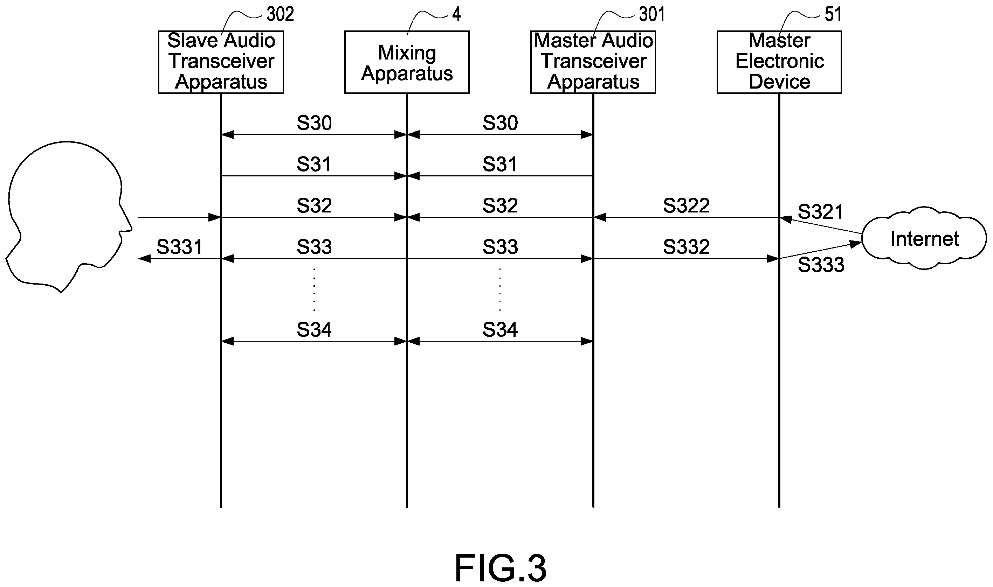

Please refer to FIG. 2 and FIG. 3 at the same time, wherein FIG. 3 is a connection sequence diagram according to an embodiment of the present disclosure. FIG. 3 is depicted to interpret each step of the assisting method of the present disclosure.

In the embodiment of FIG. 3, one of the multiple audio transceiver apparatuses 3 that connects to a master electronic device 51 (i.e., the electronic device 5 attends the online meeting) is regarded as a master audio transceiver apparatus 301 and rest of the audio transceiver apparatuses 3 other than the master audio transceiver apparatus 301 are regarded as slave audio transceiver apparatuses 302. For the sake of discussion, the embodiment of FIG. 3 takes one master audio transceiver apparatus 301 and one slave audio transceiver apparatus 302 as an example.

As shown in FIG. 3, in step S30, the master audio transceiver apparatus 301 and the slave audio transceiver apparatus 302 respectively send a pairing and connecting request to the mixing apparatus 4. In step S31, the mixing apparatus 4 completes the pairing with the master audio transceiver apparatus 301 and the slave audio transceiver apparatus 302 and establishes the connection respectively with the master audio transceiver apparatus 301 and the slave audio transceiver apparatus 302.

In step S32, each of the master audio transceiver apparatus 301 and the slave audio transceiver apparatus 302 respectively receives the audio signal through its audio receiving device 35 and then transmits the received audio signal to the mixing apparatus 4.

It should be mentioned that if the master electronic device 51 has initiated or joined an online meeting, then in step S321, the master electronic device 51 may receive the audio signal from the online meeting over the Internet. In step S322, the master electronic device 51 transmits the audio signal received from the online meeting to the master audio transceiver apparatus 301. In the embodiment, the audio signal the master audio transceiver apparatus 301 transmits to the mixing apparatus 4 is the audio signal the master electronic device 51 received from the online meeting; however, the master audio transceiver apparatus 301 may simultaneously receive external audio signal from its audio receiving device 35.

In step S33, the mixing apparatus 4 performs the mixing process to the received audio signal to generate the optimized audio signal correspondingly, and then the mixing apparatus 4 synchronously transmits the optimized audio signal to both the master audio transceiver apparatus 301 and the slave audio transceiver apparatus 302 that are under connection with the mixing apparatus 4.

In step S331, each of the master audio transceiver apparatus 301 and the slave audio transceiver apparatus 302 respectively plays the optimized audio signal through its audio playing device 36 and/or an audio playing device on the electronic device connected therewith. Therefore, the user may hear the voice of other users and other attendants of the online meeting through the master audio transceiver apparatus 301 and the slave audio transceiver apparatus 302 without only counting on the speaker of the electronic device 5.

It should be mentioned that the master audio transceiver apparatus 301 may transmit the optimized audio signal to the master electronic device 51 in step S332. Therefore, the master electronic device 51 may take the optimized audio signal as an input audio of the online meeting in step S333. In sum, the optimized audio signal may be transmitted to other attendants of the online meeting over the Internet so that other attendants may hear the voice from the users in the environment where the master electronic device 51 and the master audio transceiver apparatus 301 are located.

In the present disclosure, the master adio transceiver apparaus 301, the slave audio transceiver apparatus 302, and the mixing apparatus 4 continuously re-executes the aforementioned steps S321, S322, S32, S33, S331, S332, and S333 during the online meeting until the online meeting ends or any of the master audio transceiver apparatus 301, the slave audio transceiver apparatus 302, and the mixing apparatus 4 turns off. Next, the connection procedure ends in step S34.

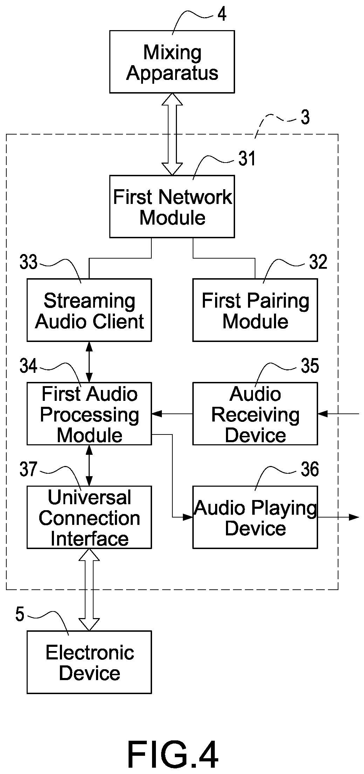

Please refer to FIG. 2 through FIG. 4, wherein FIG. 4 is a block diagram of an audio transceiver apparatus according to an embodiment of the present disclosure. As shown in FIG. 4, the audio transceiver apparatus 3 includes a first network module 31, a first pairing module 32, a streaming audio client 33, a first audio processing module 34, the audio receiving device 35, the audio playing device 36, and a universal connection interface 37.

The first network module 31 may be, for example but not limited to, a network module supporting Wi-Fi protocol or Ethernet protocol, and is used to establish a wireless connection with the mixing apparatus 4 in the environment.

The universal connection interface 37 may be a connection interface of universal serial bus (USB) and is used to electronically connect to the electronic device 5. In the present disclosure, the audio transceiver apparatus 3 connects to the electronic device 5 and transmits the audio signal therewith through the universal protocol (such as USB), so that it is unnecessary for the electronic device 5 to install an additional driver or software for using the audio transceiver apparatus 3, which is very convenient for the users.

In one embodiment, when the audio transceiver apparatus 3 connects to an electronic device 5 that initiated or joined an online meeting through the universal connection interface 37, the assisting system will regard the audio transceiver apparatus 3 as the master audio transceiver apparatus 301 (and regard the electronic device 5 as the master electronic device 51). Meanwhile, other audio transceiver apparatuses 301 connected to the mixing apparatus 4 will be regarded as slave audio transceiver apparatuses 302 by the assisting system. In the embodiment, the master audio transceiver apparatus 301 provides the optimized audio signal transmitted from the mixing apparatus 4 to the master electronic device 51 through the universal connection interface 37, so that the master electronic device 51 may use the optimized audio signal as the input audio signal of the online meeting. Besides, the master audio transceiver apparatus 301 may receive the audio signal transmitted by the online meeting from the master electronic device 51 through the universal connection interface 37.

The first pairing module 32 connects to the first network module 31. When the audio transceiver device 3 is triggered by the user or the electronic device 5, the first pairing module 32 sends the pairing and connecting request to the mixing apparatus 4 in the environment. In particularly, the first pairing module 32 sends a requesting command to the mixing apparatus 4, wherein the requesting command at least includes information of the audio transceiver apparatus 3, such as ID or serial number, etc. Therefore, the mixing apparatus 4 is requested to add the audio transceiver apparatus 3 into its connection list based on the information recorded in the requesting command to complete the pairing action.

The audio receiving device 3 continuously senses external audio signal after the audio transceiver apparatus 3 is activated. The audio playing device 36 continuously plays the optimized audio signal transmitted by the mixing apparatus 4 after the audio transceiver apparatus 3 is activated.

The streaming audio client 33 connects to the first network module 31. After the audio receiving device 35 receives the audio signal, the streaming audio client 33 transmits the audio signal to the connected mixing apparatus 4 through the first network module 31 by way of streaming. Therefore, the mixing apparatus 4 may continuously perform the mixing process to the audio signal sensed by the audio transceiver apparatus 3 in real time. In addition, the streaming audio client 33 receives the optimized audio signal transmitted by the mixing apparatus 4 through the first network module 31. Next, the streaming audio client 33 transmits the optimized audio signal to the audio playing device 36 through the first audio processing module 34 or to the connected electronic device 5 through the universal connection interface 37.

In one embodiment, the audio transceiver apparatus 3 includes the first audio processing module 34. The first audio processing module 34 connects to the audio receiving device 35, the audio playing device 36, the streaming audio client 33, and the universal connection interface 37. In the embodiment, after receiving the audio signal from the audio receiving device 35 or the universal connection interface 37, the audio transceiver apparatus 3 performs a first stage optimization process to the audio signal by the first audio processing module 34 to generate a processed audio signal and then transmits the processed audio signal to the mixing apparatus 4 for the mixing process.

In one embodiment, the first stage optimization process performed by the audio transceiver apparatus 3 is different from the mixing process performed by the mixing apparatus 4. More specifically, the first stage optimization process may be, for example but not limited to, an echo cancellation process, an auto-gain process, or a noise suppression process, etc.

In one embodiment, the audio transceiver apparatus 3 performs the first stage optimization process by hardware (i.e., the first audio processing module 34 is implemented by hardware component). In another embodiment, the audio transceiver apparatus 3 performs the first stage optimization process by software (i.e., the first audio processing module 34 is implemented by software component).

The present disclosure uses the audio transceiver apparatus 3 to perform the first stage optimization process after receiving the audio signal and then transmits the processed audio signal to the mixing apparatus 4 for the mixing process. Therefore, the present disclosure indirectly increases the quality of the optimized audio signal based on the quality of original audio signal.

It should be noticed that the audio transceiver apparatus 3 includes at least one physical button (not shown), which is used to operate the audio transceiver apparatus 3. For example, the audio transceiver apparatus 3 may have a physical button used to mute the audio receiving device 35 or a physical button used to adjust the volume of the audio playing device 36, but not limited thereto. Therefore, the user may mute the audio transceiver apparatus 3 while hearing or adjust the volume of the audio transceiver apparatus 3 while other attendant of the online meeting is speaking.

In one embodiment, the first pairing module 32, the streaming audio client 33, and the first audio processing module 34 are implemented by one or more hardware components of the audio transceiver apparatus 3. In other words, the first pairing module 32, the streaming audio client 33, and the first audio processing module 34 are hardware modules.

In another embodiment, the audio transceiver apparatus 3 includes a processor (not shown) and the processor records computer executable program codes. When the processor executes the computer executable program codes, the first pairing module 32, the streaming audio client 33, and the first audio processing module 34 are virtually created inside the processor to implement each function required by the audio transceiver apparatus 3. In other words, the first pairing module 32, the streaming audio client 33, and the first audio processing module 34 are software modules.

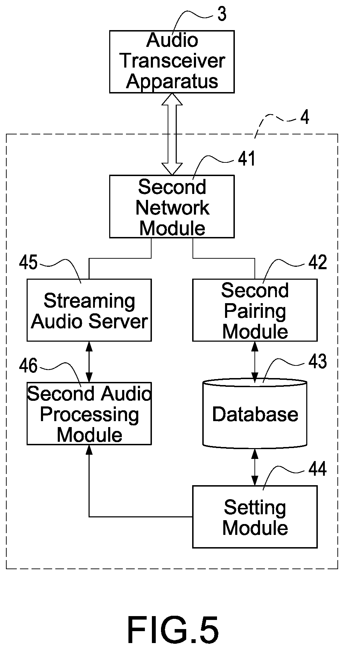

Please refer to FIG. 2 through FIG. 5 at the same time, wherein FIG. 5 is a block diagram of a mixing apparatus according to an embodiment of the present disclosure. As shown in FIG. 5, the mixing apparatus 4 includes a second network module 41, a second pairing module 42, a database 43, a setting module 44, a streaming audio server 45, and a second audio processing module 46.

The second network module 41 may be a network module supporting Wi-Fi protocol or Ethernet protocol, and is used to establish a wireless connection with the audio transceiver apparatus 3 in the environment. In particularly, the protocol used by the second network module 41 is identical to that used by the first network module 31 so that the second network module 41 may receive and identify the pairing and connecting request sent by the audio transceiver apparatus 3. Therefore, the mixing apparatus 4 may be paired with the audio transceiver apparatus 3 and establish a connection with the audio transceiver apparatus 3.

The second pairing module 42 connects to the second network module 41 and is used to receive the pairing and connecting request sent by the audio transceiver apparatus 3 in the environment. In one embodiment, the pairing and connecting request at least includes the information of the audio transceiver apparatus 3 requested for pairing (e.g., ID or serial number, etc.). After receiving the pairing and connecting request, the mixing apparatus 4 retrieves the information of the audio transceiver apparatus 3 from the request by the second pairing module 42 and records the information to the database 43. By adding the information of the audio transceiver apparatus 3 to a pairing list of the database 43, the mixing apparatus 4 may allow the audio transceiver apparatus 3 to establish a connection with the mixing apparatus 4.

The streaming audio server 45 connects to the second network module 41. The second audio processing module 46 connects to the streaming audio server 45 and connects to the second network module 41 through the streaming audio server 45. The second audio processing module 46 receives the audio signal sent by the audio transceiver apparatus 3 through the streamlining audio server 45 and the second network module 41 and performs the mixing process to the audio signal to generate the optimized audio signal. After the optimized audio signal is generated by the second audio processing module 46, the streaming audio server 45 synchronously transmits the optimized audio signal to the multiple audio transceiver apparatuses 3 that are under connection with the mixing apparatus 4 (including the master audio transceiver apparatus 301 connected to the master electronic device 51) through the second network module 41 by way of streaming.

It should be mentioned that the second audio processing module 46 of the present disclosure performs a second stage optimization process to the audio signal transmitted from the audio transceiver apparatus 3. In one embodiment, the second stage optimization process includes the mixing process and other optimization processes other than the mixing process, wherein the other optimization processes at least include an echo cancellation process but not limited thereto. The present disclosure performs the second stage optimization process to the audio signal (or the optimized audio signal) to further improve the quality of the audio signal heard by other users in the environment or other attendants of the online meeting.

The setting module 44 connects to the database 43 and the second audio module 46 and is used to set one or more optimization parameters used by the second audio processing module 46. In one embodiment, the setting module 44 provides a web-based graphical user interface (web GUI). The web GUI allows the user to log in to the mixing apparatus 4 from the outside through the Internet, so that the user may operate the web GUI to set the optimization parameters of the mixing apparatus 4. In the embodiment, the optimization parameters include the parameter used by the mixing process, the parameter used by the echo cancellation process, and the parameter used by other optimization processes. The second audio processing module 46 may perform the second stage optimization process to the received audio signal in accordance with the optimization parameters set by the user.

The database 43 connects to the second pairing module 42 and the setting module 44 and is used to store the pairing and connecting request of the audio transceiver apparatus 3 and the optimization parameters set by the user. In one embodiment, the database 43 may be implemented by a hard-dive disc (HDD), a solid-state drive (SSD), or a non-volatile memory (NVM), etc. but not limited thereto.

In one embodiment, the second pairing module 42, the setting module 44, the streaming audio server 45, and the second audio processing module 46 are implemented by one or more hardware components of the mixing apparatus 4. In other words, the second pairing module 42, the setting module 44, the streaming audio server 45, and the second audio processing module 46 may be hardware modules.

In another embodiment, the mixing apparatus 4 includes a processor (not shown) and the processor records computer executable program codes. After the processor executes the computer executable program codes, the second pairing module 42, the setting module 44, the streaming audio server 46, and the second audio processing module 46 are virtually created inside the processor to implement each function required by the mixing apparatus 4. In other words, the second pairing module 42, the setting module 44, the streaming audio server 45, and the second audio processing module 46 may be software modules.

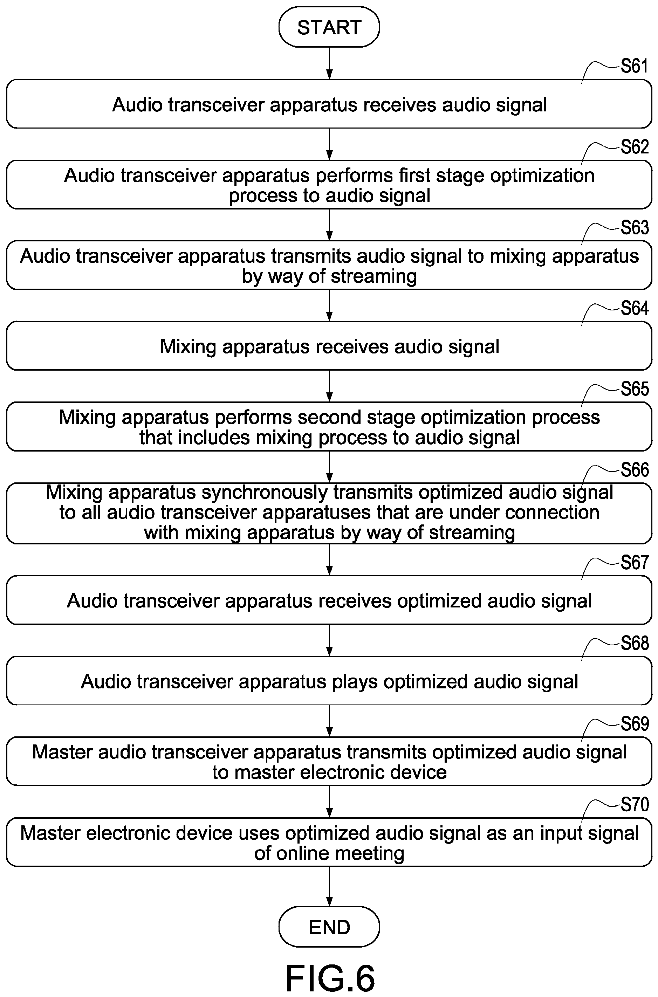

Please refer to FIG. 2 through FIG. 6 at the same time, wherein FIG. 6 is a flowchart of audio processing according to an embodiment of the present disclosure. FIG. 6 depicts each processing step for the assisting system to sense and optimize the audio signal through the audio transceiver apparatus 3 and the mixing apparatus 4.

When the user wants to initiate or join an online meeting, the user may connect each electronic device 5 to each audio transceiver apparatus 3. Each audio transceiver apparatus 3 and each electronic device 5 are respectively placed in same or difference spaces (such as same or difference meeting rooms) in the environment and each audio transceiver apparatus 3 establishes a connection with one mixing apparatus 4 in the same environment. Next, the user uses one of the electronic devices 5 as the master electronic device 51 and initiates or joins an online meeting by the master electronic device 51. At this time, the arrangement for the assisting system is completed.

Next, as shown in FIG. 6, one or more audio transceiver apparatuses 3 may receive an audio signal (step S61). The audio signal of the embodiment may be the voice made by the user to the audio receiving device 35 of any of the audio transceiver apparatuses 3 or the voice made by other attendants transmitted from the online meeting.

After receiving the audio signal, the audio transceiver apparatus 3 performs the first stage optimization process to the audio signal by the first audio processing module 34 (step S62), and then the audio transceiver apparatus 3 uses the streaming audio client 33 to transmit the audio signal to the mixing apparatus 4 through the first network module 31 by way of streaming (step S63).

The mixing apparatus 4 receives the audio signal transmitted from the audio transceiver apparatus 3 through the wireless network (step S64) and then performs the second stage optimization process that at least includes the mixing process to the audio signal by the second audio processing module 46 (step S65), so as to generate an optimized audio signal. Next, the mixing apparatus 4 uses the streaming audio server 45 to synchronously transmits the optimized audio signal to all of the audio transceiver apparatuses 3 that are under connection with the mixing apparatus 4 through the second network module 41 by way of streaming (step S66).

In the present disclosure, each of the audio transceiver apparatuses 3 respectively receives the optimized audio signal transmitted from the mixing apparatus 4 through its first network module 31 (step S67) and respectively plays the optimized audio signal through an audio playing device (step S68). In particularly, the above audio playing device may be the audio playing device 36 embedded in each of the audio transceiver apparatuses 3 or the audio playing device connected to each of the electronic devices 5. Therefore, all the users in the environment may hear the same speech from the same online meeting through same or different audio transceiver apparatuses 3.

On the other hand, one of the multiple audio transceiver apparatuses 3 that connects to the master electronic device 51 is the master audio transceiver apparatus 301. The master audio transceiver apparatus 301 may play the optimized audio signal through its audio playing device 36 and transmit the optimized audio signal to the master electronic device 51 through its universal connection interface 37 (step S69). Therefore, the master electronic device 51 may use the optimized audio signal as an input signal for the online meeting (step S70).

By using the assisting system of the present disclosure, even if multiple users using multiple electronic devices are located at same place (such as a company or a factory), but only one of the electronic devices is required to join the online meeting and then all audio content of the online meeting can be shared to all other users synchronously through one mixing apparatus and multiple audio transceiver apparatuses connected therewith. Therefore, the setting procedure for the online meeting can be simplified and the hassle of the installation for the online meeting software may be prevented.

## Claims

1. An assisting system for online meeting, comprising:
one electronic device (5) that installs and runs an online meeting software (6) causing the electronic device (5) to participate in an online meeting over the Internet, said electronic device (5) running said online meeting software (6) being designated a master electronic device (51), whereby said master electronic device (51) is connected to an audio transceiver apparatus (3) designated a master audio transceiver apparatus (301); and
one or more other electronic devices (5) not having installed and not running said online meeting software (6), each of the one or more other electronic devices (5) being connected to one of a plurality of audio transceiver apparatuses (3), designated slave audio transceiver apparatuses (302);
wherein each of the master audio transceiver apparatus (301) and the one or more slave audio transceiver apparatuses (302) comprises a first network module (31) that is configured to wirelessly connect with a mixing apparatus (4), and
the mixing apparatus (4) comprising a second network module (41) that is configured to wirelessly connect with each of the audio transceiver apparatuses (3);
wherein the mixing apparatus (4) is configured to receive audio signals from the master audio transceiver device (301) and the one or more slave audio transceiver apparatuses (302), perform a mixing process to the audio signals to generate an optimized audio signal, and synchronously transmit the optimized audio signal to all of the audio transceiver apparatuses (3) that are connected with the mixing apparatus (4);
wherein the master audio transceiver apparatus (301) receiving the optimized audio signal from the mixing apparatus (4) enables the one or more other electronic devices (5) to also participate in the online meeting over the Internet, via the connected master electronic device (51).

2. The assisting system of claim 1, wherein the master audio transceiver apparatus (301) electronically connects to the electronic device (5) through a universal connection interface (37).

3. The assisting system of claim 1, wherein each of the audio transceiver apparatuses (3) respectively comprises:
a first pairing module (32) connected to the first network module (31), configured to send a pairing and connection request to the mixing apparatus (4);
a streaming audio client (33) connected to the first audio module (31), configured to transmit the audio signal to the mixing apparatus (4) through the first network module (31) by way of streaming; and
a universal connection interface (37), configured to electrically connect to the electronic device (5), transmit the optimized audio signal to the electronic device (5), and receive the audio signal sent by the online meeting from the electronic device (5).

4. The assisting system of claim 3, wherein each of the audio transceiver apparatus (3) respectively comprises an audio playing device (36) which is configured to play the optimized audio signal.

5. The assisting system of claim 4, wherein each of the audio transceiver apparatuses (3) respectively comprises a first audio processing module (34) connected to the audio receiving device (35), the audio playing device (36), the streaming audio client (33), and the universal connection interface (37), configured to perform a first stage optimization process to the audio signal, wherein the first stage optimization process is different from the mixing process.

6. The assisting system of claim 5, wherein the first stage optimization process comprises an echo cancellation process, an auto-gain process, or a noise suppression process.

7. The assisting system of claim 5, wherein each of the audio transceiver apparatuses (3) respectively comprises at least one physical button for muting the audio receiving device (35) or adjusting a volume of the audio playing device (36).

8. The assisting system of claim 3, wherein the mixing apparatus (4) comprises:
a second pairing module (42) connected to the second network module (41), configured to receive the pairing and connection request of each of the audio transceiver apparatuses (3);
a second audio processing module (46), configured to perform the mixing process to the audio signal to generate the optimized audio signal; and
a streaming audio server (45) connected to the second audio processing module (46) and the second network module (41), configured to receive the audio signal through the second network module (41) by way of streaming and transmit the optimized audio signal to the multiple audio transceiver apparatuses (3).

9. The assisting system of claim 8, wherein the mixing apparatus (4) further comprises:
a setting module (44) connected to the second audio processing module (46), configured to set one or more optimization parameters of the second audio processing module (46); and
a database (43) connected to the second pairing module (42) and the setting module (44), configured to store the pairing and connection request and the one or more optimization parameters

10. The assisting system of claim 9, wherein the second audio processing module (46) is configured to perform a second stage optimization process to the audio signal based on the one or more optimization parameters, wherein the second stage optimization process comprises the mixing process and an echo cancellation process.

11. The assisting system of claim 9, wherein the setting module (44) is configured to provide a web-based graphical user interface, web GUI, and the web GUI is provided for an external log in to set the one or more optimization parameters.

12. An assisting method for online meeting, incorporated with an assisting system comprising one master electronic device (51) that installs and runs an online meeting software (6) causing the master electronic device (51) to participate in an online meeting over the Internet, a master audio transceiver apparatus (301) connected with the master electronic device (51), one or more other electronic devices (5) not having installed and not running said online meeting software (6), one or more slave audio transceiver apparatuses (302) respectively connected to the one or more other electronic device (5), and a mixing apparatus (4) wirelessly connected with each of the master audio transceiver apparatus (301) and the one or more slave audio transceiver apparatuses (302), wherein the assisting method comprises:
a) respectively transmitting an audio signal to the mixing apparatus (4) by the master audio transceiver apparatus (301) and the one or more slave audio transceiver apparatuses (302);
b) receiving audio signals and performing a mixing process to the audio signals to generate an optimized audio signal by the mixing apparatus (4);
c) synchronously transmitting the optimized audio signal to the master audio transceiver apparatus (301) and the one or more slave audio transceiver apparatuses (302) that are connected with the mixing apparatus (4) by the mixing apparatus (4);
d) respectively receiving the optimized audio signal by the master audio transceiver apparatus (301) and the one or more slave audio transceiver apparatuses (302); and
e) receiving the optimized audio signal from the mixing apparatus (4) to enable the one or more other electronic devices (5) to also participate in the online meeting over the Internet, via the connected master electronic device (51), by the master audio transceiver apparatus (301).

13. The assisting method of claim 12, wherein the step a) comprises respectively receiving the audio signal by an audio receiving device (35) of the master audio transceiver apparatus (301) and the slave audio transceiver apparatus (302) or receiving the audio signal by the master audio transceiver apparatus (301) through the electronic device (5) from the online meeting.

14. The assisting method of claim 12, further comprising a step d1) after the step d): respectively playing the optimized audio signal by an audio playing device (36) of the master audio transceiver apparatus (301) and the slave audio transceiver apparatus (302) or playing the optimized audio signal by the electronic device (5).

## Patentansprüche

1. Hilfssystem für Online-Meeting, umfassend:
eine elektronische Vorrichtung (5), auf der eine Online-Meeting-Software (6) installiert ist und ausgeführt wird, wodurch die elektronische Vorrichtung (5) über das Internet an einem Online-Meeting teilnimmt, wobei die elektronische Vorrichtung (5), auf der die Online-Meeting-Software (6) ausgeführt wird, als Master- elektronische Vorrichtung Elektronikvorrichtung (51) bezeichnet wird, wobei die Master elektronische Vorrichtung (51) mit einer Audio-Sendeempfangs-Vorrichtung (3) verbunden ist, die als Master-Audio-Sendeempfangs-Vorrichtung (301) bezeichnet wird; und
einem oder mehreren weiteren elektronischen Vorrichtungen (5), auf denen die Online-Meeting-Software (6) nicht installiert ist und nicht ausgeführt wird, wobei jedes der einen oder mehreren weiteren elektronischen Vorrichtungen (5) mit einer von mehreren Audio-Sendeempfangs-Vorrichtungen (3) verbunden ist, die als Slave-Audio-Sendeempfangs-Vorrichtungen (302) bezeichnet werden;
wobei sowohl die Master-Audio-Sendeempfangs-Vorrichtung (301) als auch die eine oder mehreren Slave-Audio-Sendeempfangs-Vorrichtungen (302) ein erstes Netzwerkmodul (31) umfassen, das so konfiguriert ist, dass es eine drahtlose Verbindung mit einer Mischanlage (4) herstellt, und
wobei die Mischanlage (4) ein zweites Netzwerkmodul (41) umfasst, das so konfiguriert ist, dass es sich drahtlos mit jeder der Audio-Sendeempfangs-Vorrichtungen (3) verbindet;
wobei die Mischanlage (4) so konfiguriert ist, dass sie Audio-Signale von der Master-Audio-Sendeempfangs-Vorrichtung (301) und der einen oder den mehreren Slave-Audio-Sendeempfangs-Vorrichtungen (302) empfängt, einen Mischprozess an den Audio-Signalen durchführt, um ein optimiertes Audio-Signal zu erzeugen, und das optimierte Audio-Signal synchron an alle Audio-Sendeempfangs-Vorrichtungen (3) überträgt, die mit der Mischanlage (4) verbunden sind;
wobei die Master-Audio-Sendeempfangs-Vorrichtung (301), die das optimierte Audio-Signal von der Mischanlage (4) empfängt, es den einen oder den mehreren anderen elektronischen Vorrichtungen (5) ermöglicht, über die verbundene Master elektronische Vorrichtung (51) ebenfalls an dem Online-Meeting über das Internet teilzunehmen.

2. Hilfssystem nach Anspruch 1, wobei die Master-Audio-Sendeempfangs-Vorrichtung (301) über eine universelle Anschluss-Schnittstelle (37) elektronisch mit der elektronischen Vorrichtung (5) verbunden ist.

3. Hilfssystem nach Anspruch 1, wobei jede der Audio-Sendeempfangs-Vorrichtungen (3) jeweils umfasst:
ein erstes Kopplungsmodul (32), das mit dem ersten Netzwerkmodul (31) verbunden ist und so konfiguriert ist, dass es eine Kopplungs- und Verbindungsanfrage an die Mischanlage (4) sendet;
einen Streaming-Audio-Client (33), der mit dem ersten Audiomodul (31) verbunden ist und so konfiguriert ist, dass er das Audio-Signal über das erste Netzwerkmodul (31) mittels Streaming an die Mischanlage (4) überträgt; und
eine universelle Anschluss-Schnittstelle (37), die so konfiguriert ist, dass sie eine elektrische Verbindung mit der elektronischen Vorrichtung (5) herstellt, das optimierte Audio-Signal an die elektronische Vorrichtung (5) überträgt und das von dem Online-Meeting gesendete Audio-Signal von der elektronischen Vorrichtung (5) empfängt.

4. Hilfssystem nach Anspruch 3, wobei jede der Audio-Sendeempfangs-Vorrichtungen (3) jeweils ein Audio-Wiedergabegerät (36) umfasst, das so konfiguriert ist, dass es das optimierte Audio-Signal wiedergibt.

5. Hilfssystem nach Anspruch 4, wobei jede der Audio-Sendeempfangs-Vorrichtungen (3) jeweils ein erstes Audio-Bearbeitungsmodul (34) umfasst, das mit dem Audio-Empfangsgerät (35), das Audio-Wiedergabegerät (36), den Streaming-Audio-Client (33) und die universelle Anschluss-Schnittstelle (37) verbunden ist und so konfiguriert ist, dass es einen Optimierungsprozess der ersten Stufe für das Audio-Signal durchführt, wobei sich der Optimierungsprozess der ersten Stufe vom Mischprozess unterscheidet.

6. Hilfssystem nach Anspruch 5, wobei der Optimierungsprozess der ersten Stufe einen Echokompensationsprozess, einen Auto-Verstärkungsprozess oder einen Rauschunterdrückungsprozess umfasst.

7. Hilfssystem nach Anspruch 5, wobei jede der Audio-Sendeempfangs-Vorrichtungen (3) jeweils mindestens eine physische Taste zum Stummschalten des Audio-Empfangsgeräts (35) oder zum Einstellen der Lautstärke des Audio-Wiedergabegeräts (36) umfasst.

8. Hilfssystem nach Anspruch 3, wobei die Mischanlage (4) umfasst:
ein zweites Kopplungsmodul (42), das mit dem zweiten Netzwerkmodul (41) verbunden ist und so konfiguriert ist, dass es die Kopplungs- und Verbindungsanforderung von jeder der Audio-Sendeempfangs-Vorrichtungen (3) empfängt;
ein zweites Audio-Bearbeitungsmodul (46), das so konfiguriert ist, dass es den Mischprozess an dem Audio-Signal durchführt, um das optimierte Audio-Signal zu erzeugen; und
einen Streaming-Audio-Server (45), der mit dem zweiten Audio-Bearbeitungsmodul (46) und dem zweiten Netzwerkmodul (41) verbunden ist und so konfiguriert ist, dass er das Audio-Signal über das zweite Netzwerkmodul (41) mittels Streaming empfängt und das optimierte Audio-Signal an die mehrere Audio-Sendeempfangs-Vorrichtungen (3) überträgt.

9. Hilfssystem nach Anspruch 8, wobei die Mischanlage (4) ferner umfasst:
ein Einstellungsmodul (44), das mit dem zweiten Audio-Bearbeitungsmodul (46) verbunden ist und so konfiguriert ist, dass es einen oder mehrere Optimierungsparameter des zweiten Audio-Bearbeitungsmoduls (46) einstellt; und
eine Datenbank (43), die mit dem zweiten Kopplungsmodul (42) und dem Einstellungsmodul (44) verbunden ist und dazu ausgelegt ist, die Kopplungs- und Verbindungsanforderung sowie den einen oder die mehreren Optimierungsparameter zu speichern

10. Hilfssystem nach Anspruch 9, wobei das zweite Audio-Bearbeitungsmodul (46) so konfiguriert ist, dass es einen Optimierungsprozess der zweiten Stufe für das Audio-Signal auf der Grundlage des einen oder der mehreren Optimierungsparameter durchführt, wobei der Optimierungsprozess der zweiten Stufe den Mischprozess und einen Echokompensationsprozess umfasst.

11. Hilfssystem nach Anspruch 9, wobei das Einstellungsmodul (44) so konfiguriert ist, dass es eine webbasierte grafische Benutzeroberfläche, Web-GUI, bereitstellt, und die Web-GUI für eine externe Anmeldung bereitgestellt wird, um den einen oder die mehreren Optimierungsparameter einzustellen.

12. Hilfsverfahren für Online-Meetings, integriert in ein Hilfssystem, das eine Master elektronische Vorrichtung (51) umfasst, auf der die Online-Meeting-Software (6) installiert ist und ausgeführt wird, wodurch die Master elektronische Vorrichtung (51) an einem Online-Meeting über das Internet teilnimmt, eine mit der Master elektronische Vorrichtung (51) verbundene Master-Audio-Sendeempfangs-Vorrichtung (301), eine oder mehrere andere elektronische Vorrichtungen (5), auf denen die Online-Meeting-Software (6) installiert ist und diese nicht ausführt, ein oder mehrere Slave-Audio-Sendeempfangs-Vorrichtungen (302), die jeweils mit der einen oder den mehreren anderen elektronischen Vorrichtungen (5) verbunden sind, und eine Mischanlage (4), die drahtlos mit der Master-Audio-Sendeempfangs-Vorrichtung (301) und jeder der einen oder mehreren Slave-Audio-Sendeempfangs-Vorrichtungen (302) verbunden ist, wobei das Hilfsverfahren umfasst:
a) das Senden eines Audio-Signals an die Mischanlage (4) durch die Master-Audio-Sendeempfangs-Vorrichtung (301) bzw. die eine oder mehrere Slave-Audio-Sendeempfangs-Vorrichtungen (302);
b) Empfangen von Audio-Signalen und Durchführen eines Mischprozesses an den Audio-Signalen durch die Mischanlage (4), um ein optimiertes Audio-Signal zu erzeugen;
c) synchrones Senden des optimierten Audio-Signals an die Master-Audio-Sendeempfangs-Vorrichtung (301) und die eine oder mehrere Slave-Audio-Sendeempfangs-Vorrichtungen (302), die mit der Mischanlage (4) verbunden sind, durch die Mischanlage (4);
d) Empfangen des optimierten Audio-Signals durch die Master-Audio-Sendeempfangs-Vorrichtung (301) bzw. die eine oder mehrere Slave-Audio-Sendeempfangs-Vorrichtungen (302); und
e) Empfangen des optimierten Audio-Signals von der Mischanlage (4), um es dem einen oder den mehreren anderen elektronischen Vorrichtungen (5) zu ermöglichen, ebenfalls über das Internet an dem Online-Meeting teilzunehmen, und zwar über die angeschlossene Master elektronische Vorrichtung (51) durch die Master-Audio-Sendeempfangs-Vorrichtung (301).

13. Hilfsverfahren nach Anspruch 12, wobei der Schritt a) das jeweilige Empfangen des Audio-Signals durch ein Audio-Empfangsgerät (35) der Master-Audio-Sendeempfangs-Vorrichtung (301) und der Slave-Audio-Sendeempfangs-Vorrichtung (302) oder das Empfangen des Audio-Signals durch die Master-Audio-Sendeempfangs-Vorrichtung (301) über die elektronische Vorrichtung (5) vom Online-Meeting umfasst.

14. Hilfsverfahren nach Anspruch 12, das ferner einen Schritt d1) nach dem Schritt d) umfasst: das jeweilige Abspielen des optimierten Audio-Signals durch ein Audio-Wiedergabegerät (36) der Master-Audio-Sendeempfangs-Vorrichtung (301) und der Slave-Audio-Sendeempfangs-Vorrichtung (302) oder das Abspielen des optimierten Audio-Signals durch die elektronische Vorrichtung (5).

## Revendications

1. Système d'assistance pour réunion en ligne, comprenant:
un dispositif électronique (5) sur lequel un logiciel de réunion en ligne (6) est installé et s'exécute, ce qui permet au dispositif électronique (5) de participer à une réunion en ligne via Internet, le dispositif électronique (5), sur lequel le logiciel de réunion en ligne (6) est exécuté, est désigné comme dispositif électronique maître (51), le dispositif électronique maître (51) étant connecté à un dispositif d'émission-réception audio (3), désigné comme dispositif maître d'émission-réception audio (301); et
un ou plusieurs autres dispositifs électroniques (5) sur lesquels le logiciel de réunion en ligne (6) n'est pas installé et n'est pas exécuté, chacun desdits un ou plusieurs autres dispositifs électroniques (5) étant connecté à l'un de plusieurs dispositifs d'émission-réception audio (3), désignés comme dispositifs esclaves d'émission-réception audio (302);
dans lequel tant le dispositif maître d'émission-réception audio (301) que le ou les dispositifs esclaves d'émission-réception audio (302) comprennent un premier module réseau (31) configuré pour établir une connexion sans fil avec une unité de mélange (4), et
dans lequel l'unité de mélange (4) comprend un second module réseau (41) configuré pour se connecter sans fil à chacun des dispositifs d'émission-réception audio (3);
l'unité de mélange (4) étant configurée pour recevoir des signaux audio provenant du dispositif maître d'émission-réception audio (301) et du ou des dispositifs esclaves d'émission-réception audio (302), effectue un procédé de mélange sur les signaux audio afin de générer un signal audio optimisé, et transmet le signal audio optimisé de manière synchrone à tous les dispositifs d'émission-réception audio (3) connectés à l'unité de mélange (4);
le dispositif maître d'émission-réception audio (301), qui reçoit le signal audio optimisé provenant de l'unité de mélange (4), permettant à un ou plusieurs autres dispositifs électroniques (5) de participer également à la réunion en ligne via Internet par l'intermédiaire du dispositif électronique maître connecté (51) et d' .

2. Système d'assistance selon la revendication 1, dans lequel le dispositif maître d'émission-réception audio (301) est connecté électroniquement au dispositif électronique (5) via une interface de connexion universelle (37).

3. Système d'assistance selon la revendication 1, dans lequel chacun des dispositifs d'émission-réception audio (3) comprend respectivement:
un premier module de couplage (32) qui est connecté au premier module réseau (31) et qui est configuré pour envoyer une demande de couplage et de connexion à l'unité de mélange (4);
un client de streaming audio (33) qui est connecté au premier module audio (31) et qui est configuré pour transmettre le signal audio à l'unité de mélange (4) via le premier module réseau (31) par streaming; et
une interface de connexion universelle (37) configurée pour établir une connexion électrique avec le dispositif électronique (5), transmettre le signal audio optimisé au dispositif électronique (5) et recevoir le signal audio émis par la réunion en ligne depuis le dispositif électronique (5).

4. Système d'assistance selon la revendication 3, dans lequel chacun des dispositifs d'émission-réception audio (3) comprend respectivement un dispositif de restitution audio (36) configuré pour reproduire le signal audio optimisé.

5. Système d'assistance selon la revendication 4, dans lequel chacun des dispositifs d'émission-réception audio (3) comprend respectivement un premier module de traitement audio (34) qui est connecté au dispositif de réception audio (35), le dispositif de restitution audio (36), le client de streaming audio (33) et l'interface de connexion universelle (37), et est configuré pour effectuer un processus d'optimisation de premier niveau sur le signal audio, le procédé de mélange étant distinct de l'optimisation de premier niveau.

6. Système d'assistance selon la revendication 5, dans lequel le processus d'optimisation de premier niveau comprend un processus de compensation d'écho, un processus d'amplification automatique ou un processus de réduction du bruit.

7. Système d'assistance selon la revendication 5, dans lequel chacun des dispositifs d'émission-réception audio (3) comprend au moins un bouton physique permettant de mettre en sourdine le dispositif de réception audio (35) ou de régler le volume du dispositif de restitution audio (36).

8. Système d'assistance selon la revendication 3, dans lequel l'unité de mélange (4) comprend:
un second module de couplage (42) connecté au second module réseau (41) et configuré pour recevoir la demande de couplage et de connexion provenant de chacun des dispositifs d'émission-réception audio (3);
un second module de traitement audio (46) configuré pour effectuer le procédé de mélange sur le signal audio afin de générer le signal audio optimisé; et
un serveur de streaming audio (45) connecté au second module de traitement audio (46) et au second module réseau (41), et configuré pour recevoir le signal audio via le second module réseau (41) par streaming et pour transmettre le signal audio optimisé aux multiples dispositifs d'émission-réception audio (3).

9. Système d'assistance selon la revendication 8, dans lequel l'unité de mélange (4) comprend en outre:
un module de réglage (44) qui est connecté au second module de traitement audio (46) et qui est configuré pour régler un ou plusieurs paramètres d'optimisation du second module de traitement audio (46); et
une base de données (43) connectée au second module de couplage (42) et au module de réglage (44) et conçue pour stocker la demande de couplage et de connexion ainsi que le ou les paramètres d'optimisation

10. Système d'assistance selon la revendication 9, dans lequel le second module de traitement audio (46) est configuré pour effectuer un processus d'optimisation de deuxième niveau pour le signal audio sur la base du ou des paramètres d'optimisation, le processus d'optimisation de deuxième niveau comprenant le procédé de mélange et un processus de compensation d'écho.

11. Système d'assistance selon la revendication 9, dans lequel le module de réglage (44) est configuré pour fournir une interface utilisateur graphique basée sur le Web, Web-GUI, et la Web-GUI est mise à disposition pour une connexion externe afin de régler le ou les paramètres d'optimisation.

12. Procédé d'assistance pour des réunions en ligne, intégré dans un système d'assistance comprenant un dispositif électronique maître (51) sur lequel le logiciel de réunion en ligne (6) est installé et exécuté, ce qui permet au dispositif électronique maître (51) de participer à une réunion en ligne via Internet, un dispositif maître d'émission-réception audio (301) connecté au dispositif électronique maître (51), un ou plusieurs autres dispositifs électroniques (5) sur lesquels le logiciel de réunion en ligne (6) est installé mais ne s'exécute pas, un ou plusieurs dispositifs esclaves d'émission-réception audio (302), qui sont respectivement connectés au ou aux autres dispositifs électroniques (5), et une unité de mélange (4), qui est connecté sans fil au dispositif maître d'émission-réception audio (301) et à chacun des un ou plusieurs dispositifs esclaves d'émission-réception audio (302), le procédé d'assistance comprenant:
a) l'émission d'un signal audio vers l'unité de mélange (4) par le dispositif maître d'émission-réception audio (301) ou le ou les dispositifs esclaves d'émission-réception audio (302);
b) la réception de signaux audio et la réalisation d'un procédé de mélange sur les signaux audio par l'unité de mélange (4) afin de générer un signal audio optimisé;
c) l'envoi synchrone du signal audio optimisé vers le dispositif maître d'émission-réception audio (301) et le ou les dispositifs esclaves d'émission-réception audio (302) connectés à l'unité de mélange (4), par l'unité de mélange (4);
d) réception du signal audio optimisé par le dispositif maître d'émission-réception audio (301) ou par le ou les dispositifs esclaves d'émission-réception audio (302); et
e) réception du signal audio optimisé provenant de l'unité de mélange (4) afin de permettre au ou aux autres dispositifs électroniques (5) de participer également à la réunion en ligne via Internet, et ce par l'intermédiaire du dispositif électronique maître connecté (51) via le dispositif maître d'émission-réception audio (301).

13. Procédé d'assistance selon la revendication 12, dans lequel l'étape a) comprend la réception respective du signal audio par un dispositif de réception audio (35) du dispositif maître d'émission-réception audio (301) et du dispositif esclave d'émission-réception audio (302) ou la réception du signal audio par le dispositif maître d'émission-réception audio (301) via le dispositif électronique (5) de la réunion en ligne.

14. Procédé d'assistance selon la revendication 12, comprenant en outre une étape d1) après l'étape d): la lecture respective du signal audio optimisé par un dispositif de restitution audio (36) du dispositif maître d'émission-réception audio (301) et du dispositif esclave d'émission-réception audio (302) ou la lecture du signal audio optimisé par le dispositif électronique (5).
